Europäisches Patentamt

European Patent Office

Office européen des brevets

(19)

(11) EP 0 921 390 A1

(12) DEMANDE DE BREVET EUROPEEN

(43) Date de publication:
09.06.1999 Bulletin 1999/23

(51) Int. Cl.⁶: G01N 21/31

(21) Numéro de dépôt: 98403035.3

(22) Date de dépôt: 03.12.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 05.12.1997 FR 9715422

(71) Demandeur: OLDHAM FRANCE S.A.
62033 Arras Cedex (FR)

(72) Inventeurs:
• Lukica, Ivan Gavrilovic
194242 Saint Petersbourg (RU)

• Gamartz, Jemeljan Mihailovic
198332 Sain Petersbourg (RU)
• Krilov, Vladimir Arkadevic
197198 Saint Petersbourg (RU)
• Francuzova, Svetlana Igorevna
188904 Saint Petersbourg (RU)

(74) Mandataire:
Obolensky, Michel et al
c/o CABINET LAVOIX
2, place d'Estienne d'Orves
75441 Paris Cédex 09 (FR)

(54) **Procédé de détermination de la concentration d'un gaz dans un mélange gazeux et dispositif d'analyse pour la mise en oeuvre d'un tel procédé**

(57) Dans ce procédé de détermination de la concentration d'un gaz à analyser dans un mélange gazeux, on calcule, à partir d'au moins une valeur mesurée de l'intensité d'au moins un rayonnement transmis à travers le mélange à température ambiante, la valeur d'une caractéristique du mélange gazeux ayant des lois de variation en fonction de la température et de la concentration en gaz prédéterminées, on détermine la valeur de ladite caractéristique à une température de référence à partir de la loi de variation de la caractéristique en fonction de la température et l'on détermine la valeur de la concentration du gaz à partir de la loi de variation de ladite caractéristique en fonction de la concentration.

FIG.1

EP 0 921 390 A1

## Description

La présente invention est relative a un procédé de détermination de la concentration d'un gaz à analyser contenu dans un mélange gazeux par spectroscopie d'absorption optique, et un dispositif d'analyse pour la mise en oeuvre d'un tel procédé.

Dans ce type de procédé, on détermine la concentration du gaz à partir de ses caractéristiques d'absorption optique en mesurant l'intensité de rayonnements a différentes bandes de longueurs d'ondes transmis à travers le mélange gazeux.

Cette technique présente une très grande sensibilité à la température et délivre des résultats variables lorsque la température ambiante change, d'une part en raison de la modification résultante des caractéristiques des composants entrant dans la constitution du dispositif d'analyse, en particulier des composants optiques à base des semi-conducteurs, et, d'autre part, en raison de la variation du spectre d'absorption du gaz à analyser en fonction de la température, due en particulier à une variation de sa densité.

Pour compenser les erreurs de mesure provoquées par la variation de la sensibilité des composants optiques en fonction de la température, il est connu d'introduire, dans le dispositif d'analyse, une thermistance dont le coefficient de température est choisi égal à celui du composant optique photorécepteur, associée à une résistance de réglage pour amener les indications fournies par le dispositif d'analyse à zéro en l'absence de gaz à analyser. On neutralise ainsi l'influence de la température sur le photorécepteur.

Par ailleurs, pour neutraliser l'influence de la température sur le spectre d'absorption, on utilise une diode dont la dépendance en fonction de la température est semblable à celle du spectre d'absorption du gaz à analyser. Cette diode pilote une tension de calibrage alimentant la source de rayonnement de manière à compenser la variation de la densité de gaz.

Cette technique nécessite une étape préalable de calibrage du dispositif d'analyse, au cours de laquelle on emplit une cellule d'analyse optique par un gaz à une concentration connue N et l'on règle le signal de calibrage de sorte que les indications fournies correspondent à cette valeur de concentration.

Cette technique présente un certain nombre d'inconvénients, notamment en raison du fait que lorsque la température ambiante change, il est nécessaire d'effectuer à nouveau l'opération de calibrage.

En outre, ces opérations ne sont pas toujours réalisables dans la mesure où, avec un dispositif non calibré, il n'est pas possible de déterminer l'absence ou la présence de gaz à analyser dans l'environnement.

Par ailleurs, les éléments compensateurs tels que les thermistances ou les diodes permettent uniquement d'effectuer une compensation approximative de la dépendance en fonction de la température de la sensibilité du photorécepteur et du spectre d'absorption du gaz à analyser.

Enfin, ce type de procédé ne permet pas de compenser la variation des caractéristiques des composants autres que le photorécepteur.

Le but de l'invention est de pallier les inconvénients précités.

Elle a donc pour objet un procédé de détermination de la concentration d'un gaz à analyser dans un mélange gazeux, par mesure d'au moins une valeur de l'intensité d'au moins un rayonnement transmis à travers le mélange, caractérisé en ce qu'il comporte les étapes consistant à:

-    calculer, à partir d'au moins une valeur mesurée de l'intensité d'au moins un rayonnement transmis à température ambiante, la valeur d'une caractéristique du mélange gazeux ayant des lois de variation en fonction de la température et en fonction de la concentration en gaz a analyser prédéterminées ;
-    déterminer la valeur de ladite caractéristique à une température de référence prédéfinie distincte de la température ambiante, à partir de la loi de variation de la caractéristique en fonction de la température ; et
-    déterminer la valeur de la concentration du gaz à partir de la loi de variation de ladite caractéristique en fonction de la concentration.

Le procédé suivant l'invention peut en outre comporter une ou plusieurs des caractéristiques suivantes :

-    la loi de variation de ladite caractéristique en fonction de la concentration est déterminée au cours d'une étape préalable d'étalonnage en déterminant un ensemble de valeurs de la caractéristique pour différentes concentrations en gaz et à la température de référence;
-    la caractéristique est constituée par le coefficient de transmission T(N,t) du mélange gazeux, défini selon la relation :

$$T(N,t)= \frac{U(N,t)}{U(0,t)} \qquad (1)$$

dans laquelle :

T(N,t) désigne le coefficient de transmission du mélange gazeux, à la température t, contenant une concentration N de gaz à analyser ; et
U(N,t) et U(0,t) désignent l'intensité d'un signal électrique élaboré à partir de la sortie de moyens détecteurs du rayonnement transmis à travers le mélange gazeux, à la température t, le mélange contenant respectivement une concentration N et une concentration nulle de gaz à analyser, l'intensité du signal électrique U(0,t) élaboré à partir d'un mélange contenant une concentration nulle de gaz à analyser étant obtenue au cours de l'étape d'étalonnage préalable;

- au cours de l'étape préalable d'étalonnage, on mesure, à la température de référence, l'intensité du signal électrique pour différentes valeurs de la concentration du gaz à analyser et en l'absence de gaz à analyser dans le mélange gazeux, et l'on calcule pour chaque valeur de concentration, le coefficient de transmission ;
- la valeur des coefficients de transmission à la température de référence est déterminée, lors de l'analyse du mélange gazeux, à partir de la relation suivante :

$$T(N, t_{ref}) = T(N, t_a)^{\frac{LnT(N_o, t_{ref})}{LnT(N_o, t_a)}} , \qquad (2)$$

ou de la relation :

$$T(N, t_{ref}) = 1 - (1 - T(N, t_a)) \frac{1 - T(N_o, t_{ref})}{1 - T(N_o, t_a)} \qquad (3)$$

dans lesquelles :

$T(N, t_{ref})$ et $T(N, t_a)$ désignent le coefficient de transmission du mélange gazeux pour une concentration N de gaz à analyser, respectivement à la température de référence et à la température ambiante ; et

$T(N_0, t_{ref})$ et $T(N_0, t_a)$ désignent la valeur du coefficient de transmission du mélange gazeux pour une concentration $N_0$ prédéterminée de gaz à analyser, respectivement à la température de référence et à la température ambiante ;

- au cours de l'étape préalable d'étalonnage, on mesure l'intensité du signal électrique pour ladite concentration $N_0$ de gaz et pour différentes valeurs de température englobant la température de référence et la température ambiante, et l'on calcule, pour chaque valeur de température, le coefficient de transmission.

L'invention a également pour objet un dispositif d'analyse pour la détermination de la concentration d'un gaz d'un mélange gazeux enfermé dans une cellule d'analyse optique, comprenant des moyens d'émission d'un rayonnement à travers la cellule optique et des moyens de détection du rayonnement transmis reliés à des moyens de calcul de la concentration dudit gaz, caractérisé en ce que les moyens de calcul de la concentration du gaz comportent des moyens de calcul du coefficient de transmission du mélange gazeux, a température ambiante, des moyens de calcul de la valeur correspondante du coefficient de transmission à une température de référence distincte de la température ambiante et des moyens de calcul de la concentration dudit gaz par comparaison de la valeur calculée du coefficient de transmission à la température de référence avec un ensemble de valeurs prédéterminées stockées dans une mémoire et correspondant chacune à une valeur de concentration dudit gaz.

D'autres caractéristiques et avantages ressortiront de la description suivante, donnée uniquement à titre d'exemple et faite en référence aux dessins annexés sur lesquels :

- la figure 1 est un schéma synoptique d'un dispositif d'analyse d'un mélange gazeux suivant l'invention, permettant la détermination de la concentration d'un gaz à analyser contenu dans ce mélange ;
- la figure 2 est une courbe montrant la variation du coefficient de transmission en fonction de la concentration du gaz, à la température de référence ;
- la figure 3 est une courbe montrant la variation du coefficient de transmission en fonction de la température, à une concentration fixe de gaz à analyser ; et
- la figure 4 montre des courbes illustrant, en fonction de la température, les indications délivrées par le dispositif de la figure 1, respectivement en l'absence de compensation de température, et en présence d'une compensation en température.

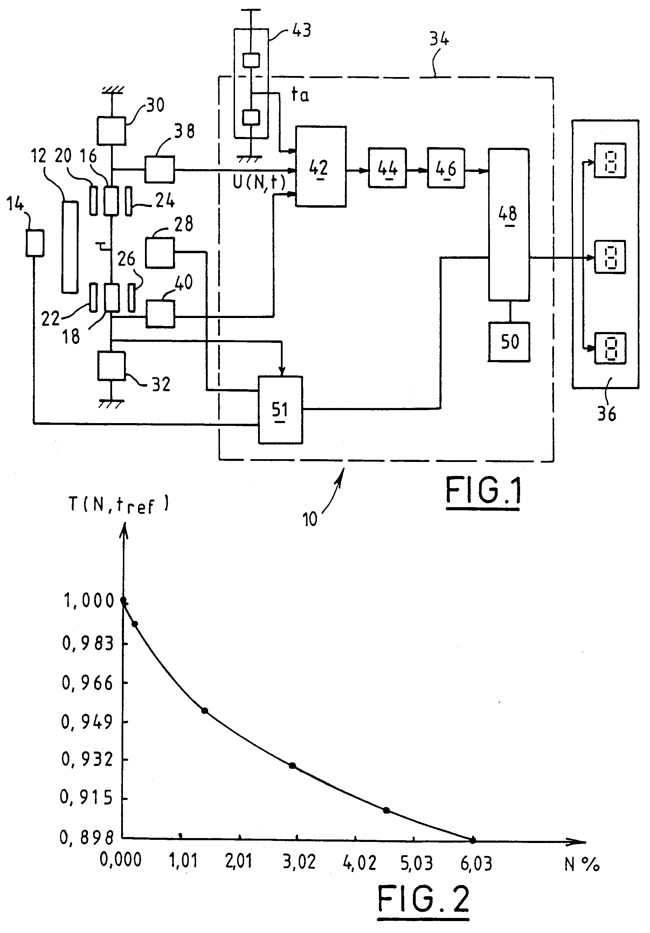

Sur la figure 1, on a représenté un dispositif d'analyse de gaz, désigné par la référence numérique générale 10, destiné à déterminer la concentration d'un gaz contenu dans un mélange gazeux enfermé dans une cellule d'analyse optique 12 de type classique.

Ce dispositif comporte des moyens d'émission d'un rayonnement tournés vers la cellule 12 et constitués par une diode électroluminescente 14 émettant par exemple un rayonnement dans le domaine de l'infrarouge, et des moyens de détection du rayonnement transmis à travers la cellule 12, constitués par des photodétecteurs 16 et 18 situés sur le trajet optique du rayonnement délivré par la diode électroluminescente 14 et constitués l'un, 16, par un photodétecteur de mesure et l'autre, 18, par un photodétecteur de référence.

Les photodétecteurs 16,18 assurent la mesure d'au moins une valeur de l'intensité d'au moins un rayonnement transmis à travers le mélange gazeux.

Chaque photodétecteur est associé à un premier filtre, respectivement 20 et 22 interposé entre la cellule 12 et le photodétecteur 16,18 correspondant et à un deuxième filtre, respectivement 24 et 26, interposé entre le photodétecteur correspondant et une source lumineuse d'étalonnage constituée par une diode électroluminescente 28 similaire à la diode 14 et permettant, comme cela est classique, un étalonnage du gain de la chaîne de mesure du rayonnement transmis à travers la cellule optique d'analyse 12.

Les filtres associés au photodétecteur 16 de mesure assurent un filtrage du rayonnement de manière à éliminer les composantes du spectre d'absorption situées en dehors de celles du gaz à analyser présent dans le mélange gazeux, tandis que les filtres associés au photodétecteur 18 de référence sont adaptés pour assurer un filtrage du rayonnement de manière à éliminer les composantes spectrales correspondantes à celles du gaz à analyser.

On voit en outre sur cette figure 1 que la sortie de chaque photodétecteur 16 et 18 est raccordée d'une part à la masse par l'intermédiaire d'une résistance de charge, respectivement 30 et 32 et à l'entrée d'une unité de traitement de signaux 34 dont la sortie est raccordée à un dispositif d'affichage 36, et d'autre part, à une source d'alimentation continue.

Plus particulièrement, on voit sur cette figure 1 que la sortie de chaque photodétecteur 16 et 18 est reliée, par l'intermédiaire d'un amplificateur diviseur, respectivement 38 et 40, à un multiplexeur 42 de l'unité 34 recevant également en entrée un signal de mesure $t_a$ de la température ambiante délivrée par un capteur approprié constitué par exemple par une thermistance 43.

Le multiplexeur 42 est relié en sortie à un amplificateur 44 et, par l'intermédiaire d'un convertisseur analogique-numérique 46, à un microprocesseur 48 associé à des moyens de mémorisation 50 dans lesquels sont stockés un ou plusieurs algorithmes de calcul de la concentration du gaz à analyser contenu dans le mélange gazeux enfermé dans la cellule optique d'analyse 12.

On voit enfin sur cette figure que le microprocesseur 48 est également relié au dispositif d'affichage 36 en vue de présenter à un opérateur des données relatives à la valeur des concentrations calculées, et à un circuit 51 de pilotage des sources lumineuses 14 et 28.

Le procédé de détermination de la concentration du gaz contenu dans le mélange gazeux, mis en oeuvre dans le dispositif 10 qui vient d'être décrit, se déroule de la façon suivante.

Dans la suite de la description, on considérera que le mélange gazeux contenu dans la cellule 12 est constitué par un mélange d'azote et de méthane, dont il s'agit de déterminer la concentration en méthane. Bien entendu, l'invention s'applique également à l'analyse d'autres gaz.

On effectue tout d'abord une étape préalable d'étalonnage au cours de laquelle on mémorise, dans la mémoire 50, le signal électrique U(O,t) élaboré à partir de la sortie des photodétecteurs 16 et 18 par calcul du rapport entre les sorties de ces photodétecteurs pour un mélange gazeux comportant une concentration nulle en gaz à analyser, donc constitué d'azote, et ce pour plusieurs valeurs de températures correspondant a la gamme de température d'utilisation du dispositif. On élabore ainsi une loi de variation du signal électrique U(0,t) en fonction de la température.

Au cours de cette étape d'étalonnage, on enregistre le signal électrique $U(N_0,t)$ correspondant au signal délivré par le photodétecteur 38 pour un mélange gazeux comportant une concentration $N_o$ prédéterminée de méthane, pour plusieurs valeurs de températures correspondant à la gamme de température d'utilisation du dispositif 10. On élabore ainsi une loi de variation du signal électrique $U(N_0,t)$ en fonction de la température.

Par ailleurs, au cours de cette étape d'étalonnage, on élabore à partir de la sortie des photodétecteurs 16 et 18, et l'on stocke dans la mémoire 50, la valeur du signal électrique $U(N,t_{ref})$ pour différentes valeurs de concentration en méthane correspondant à la gamme de concentration susceptible d'être mesurée par l'appareil et pour une valeur de température de référence $t_{ref}$ prédéterminée distincte de la température ambiante. On élabore ainsi une loi de variation du signal électrique $U(N,t_{ref})$ en fonction de la concentration du gaz à analyser, c'est-à-dire en fonction de la concentration en méthane.

A partir des valeurs mesurées et mémorisées du signal électrique $U(N_0,t)$ obtenu pour une concentration $N_0$ de méthane et pour différentes valeurs de température t, et à partir du signal électrique U(0,t) élaboré pour une concentration nulle de méthane et pour différentes valeurs de température t, on calcule, pour chacune des valeurs de température, une caractéristique du mélange gazeux dont la loi de variation en fonction de la température est connue.

Cette caractéristique est constituée par le coefficient de transmission T(N,t), également connu sous l'appellation taux de transmission ou transmitance normalisée, du mélange gazeux définie selon la relation suivante :

$$T(N,t) = \frac{U(N,t)}{U(O,t)} \qquad (1)$$

De même, au cours de cette étape d'étalonnage, le microprocesseur 48 calcule, à partir des valeurs du signal électrique $U(N,t_{ref})$ obtenues pour différentes valeurs de concentration en méthane et à la température de référence $t_{ref}$, et de la valeur du signal électrique $U(O,t_{ref})$ obtenue pour une concentration nulle en méthane et à la température de référence $t_{ref}$, la valeur du coefficient de transmission $T(N,t_{ref})$ pour chacune de ces valeurs de concentration N, au moyen de la relation (1).

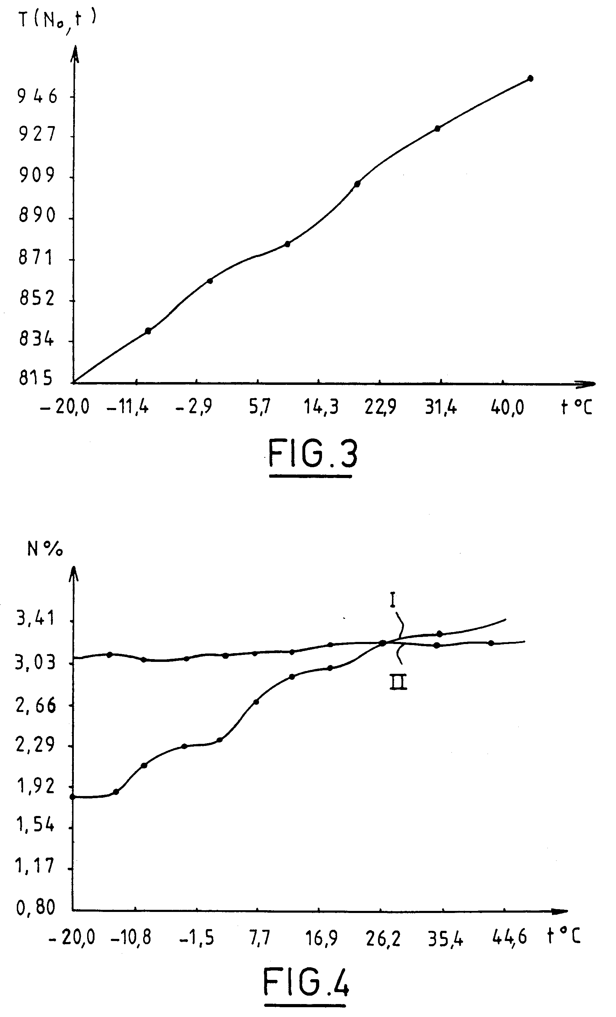

On élabore ainsi les lois de variation du coefficient de transmission d'une part en fonction de la concentration, à température de référence $t_{ref}$ fixe et, d'autre part, en fonction de la température, pour une valeur de concentration prédéterminée $N_0$ fixe, respectivement $T(N,t_{ref})$, et $T(N_0,t)$ représentées sur les figures 2 et 3.

Après cette étape préalable d'étalonnage, lorsque la cellule optique d'analyse 12 est emplie d'un mélange gazeux constitué d'azote et de méthane et contenant une concentration N inconnue de méthane, à une température ambiante $t_a$ mesurée par la thermistance 43, on calcule la valeur du signal électrique $U(N,t_a)$ à partir de la sortie des photodétecteurs 16 et 18 délivrée, par l'intermédiaire du multiplexeur 42, de l'amplificateur 44 et du convertisseur analogique-numérique 46 au microprocesseur 48.

Ce dernier extrait de la mémoire 50, à partir de la valeur de la température ambiante $t_a$, la valeur du signal électrique $U(0,t_a)$ correspondant au signal électrique calculé à partir de la sortie des photodétecteurs 16 et 18 pour une concentration nulle de méthane et à la température ambiante $t_a$.

Il calcule ensuite la valeur correspondante du coefficient de transmission $T(N,t_a)$ à l'aide de la formule (1) mentionnée précédemment.

Le microprocesseur 48 calcule ensuite, à l'aide d'un algorithme de calcul approprié stocké dans la mémoire 50 la valeur correspondante du coefficient de transmission $T(N,t_{ref})$ à la température de référence à laquelle l'étalonnage a été réalisé, à partir de la relation suivante:

$$T(N,t_{ref}) = T(N,t_a)^{\frac{LnT(N_o,t_{ref})}{LnT(N_o,t_a)}} \qquad (2)$$

ou de la relation suivante obtenue par développements limités :

$$T(N,t_{ref}) = 1-(1-T(N,t_a))\frac{1-T(N_o,t_{ref})}{1-T(N_o,t_a)} \qquad (3)$$

dans lesquelles :

La valeur ainsi calculée du coefficient de transmission $T(N,t_{ref})$ à la température de référence permet d'obtenir directement la valeur de la concentration du gaz à analyser contenu dans le mélange gazeux, à partir de la loi de variation du coefficient de transmission $T(N,t_{ref})$ en fonction de la concentration du gaz à analyser, à la température de référence $t_{ref}$, représentée sur la figure 2.

Le procédé d'analyse qui vient d'être décrit permet de déterminer de façon précise la valeur réelle de la concentration d'un gaz contenu dans un mélange gazeux quelle que soit la température ambiante.

On voit en effet sur la figure 4 que le résultat fourni au moyen du procédé selon l'invention pour un mélange gazeux constitué d'azote et de 3,04% de méthane est sensiblement constante quelle que soit la valeur de la température ambiante (courbe I).

Au contraire, la valeur de la concentration N directement obtenue à partir de la loi de variation du coefficient de transmission en fonction de la concentration à la température de référence ne coïncide avec la valeur réelle que pour une température correspondant à la température de référence (26,2°) à laquelle a été enregistrée la dépendance en fonction de la concentration du coefficient de transmission.

Pour les valeurs extrêmes de la gamme de température de fonctionnement de l'appareil, les valeurs de concentration mesurées sont totalement différentes de la valeur réelle et les résultats fournis sont totalement erronés.

On conçoit que l'invention permet de compenser les variations de densité du mélange gazeux dues à des variations de la température ambiante, et également des variations des caractéristiques des composants entrant dans la constitution du dispositif, en particulier des filtres optiques, des composants à semiconducteurs, dans la mesure où l'on effectue un calcul de la valeur normalisée du coefficient de transmission en utilisant la valeur du signal électrique $U(0,t)$ élaboré pour une concentration nulle en gaz et pour différentes valeurs de température.

## Revendications

1. Procédé de détermination de la concentration d'un gaz à analyser dans un mélange gazeux, par mesure d'au moins une valeur de l'intensité d'au moins un rayonnement transmis à travers le mélange, caractérisé en ce qu'il comporte les étapes consistant à:

   - calculer, à partir d'au moins une valeur mesurée de l'intensité d'au moins un rayonnement transmis à température ambiante, la valeur d'une caractéristique du mélange gazeux ayant des lois de variations en fonction de la température et en fonction de la concentration en gaz à analyser prédéterminées ;
   - déterminer la valeur de ladite caractéristique à une température de référence prédéfinie distincte de la température ambiante, à partir de la loi de variation de la caractéristique en fonction de la température ; et
   - déterminer la valeur de la concentration du gaz à partir de la loi de variation de ladite caractéristique en fonction de la concentration.

2. Procédé selon la revendication 1, caractérisé en ce que la loi de variation de ladite caractéristique en fonction de la concentration est déterminée au cours d'une étape préalable d'étalonnage en déterminant un ensemble de valeurs de la caractéristique pour différentes concentrations en gaz et à la température de référence.

**3.** Procédé selon la revendication 2, caractérisé en ce que la caractéristique est constituée par le coefficient de transmission T(N,t) du mélange gazeux, défini selon la relation :

$$T(N,t) = \frac{U(N,t)}{U(0,t)} \qquad (1)$$

dans laquelle :

T(N,t) désigne le coefficient de transmission du mélange gazeux, à la température t, contenant une concentration N de gaz à analyser ; et U(N,t) et U(0,t) désignent l'intensité d'un signal électrique élaboré à partir de la sortie de moyens (16,18) détecteurs du rayonnement transmis à travers le mélange gazeux, à la température t, le mélange contenant respectivement une concentration N et une concentration nulle de gaz à analyser, l'intensité du signal électrique U(0,t) élaboré à partir d'un mélange contenant une concentration nulle de gaz à analyser étant obtenue au cours de l'étape d'étalonnage préalable.

**4.** Procédé selon la revendication 3, caractérisé en ce qu'au cours de l'étape préalable d'étalonnage, on mesure, à la température de référence, l'intensité du signal électrique pour différentes valeurs de la concentration du gaz à analyser et en l'absence gaz à analyser dans le mélange gazeux, et l'on calcule pour chaque valeur de concentration, le coefficient de transmission.

**5.** Procédé selon l'une des revendications 3 et 4, caractérisé en ce que la valeur du coefficient de transmission à la température de référence est déterminée lors de l'analyse du mélange gazeux à partir de la relation suivante :

$$T(N,t_{ref}) = T(N,t_a)^{\frac{LnT(N_o,t_{ref})}{LnT(N_o,t_a)}}, \qquad (2)$$

ou de la relation :

$$T(N,t_{ref}) = 1 - (1 - T(N,t_a))\frac{1 - T(N_o,t_{ref})}{1 - T(N_o,t_a)} \qquad (3)$$

dans lesquelles :

T(N,t_{ref}) et T(N,t_a) désignent le coefficient de transmission du mélange gazeux pour une concentration M de gaz à analyser, respectivement à la température de référence et à la température ambiante ; et

T(N_0,t_{ref}) et T(N_0,t_a) désignent la valeur du coefficient de transmission du mélange gazeux pour une concentration N_0 prédéterminée de gaz à analyser, respectivement à la température de référence et à la température ambiante.

**6.** Procédé selon la revendication 5, caractérisé en ce qu'au cours de l'étape préalable d'étalonnage, on mesure l'intensité du signal électrique pour ladite concentration N_0 de gaz et pour différentes valeurs de température englobant la température de référence et la température ambiante, et l'on calcule, pour chaque valeur de température, le coefficient de transmission.

**7.** Dispositif d'analyse pour la détermination de la concentration d'un gaz d'un mélange gazeux enfermé dans une cellule d'analyse optique (12), comprenant des moyens (14) d'émission d'un rayonnement à travers la cellule optique (12) et des moyens (16,18) de détection du rayonnement transmis reliés à des moyens (34) de calcul de la concentration dudit gaz, caractérisé en ce que les moyens de calcul de la concentration du gaz comportent des moyens de calcul du coefficient de transmission (T(N,t_a)) du mélange gazeux, à température ambiante (t_a), des moyens de calcul de la valeur correspondante du coefficient de transmission (T(N,t_{ref})) à une température de référence distincte de la température ambiante (t_a) et des moyens de calcul de la concentration dudit gaz par comparaison de la valeur calculée du coefficient de transmission à la température de référence avec un ensemble de valeurs prédéterminées stockées dans une mémoire (50) et correspondant chacune à une valeur de concentration dudit gaz.

FIG.1

FIG.2

7

FIG.3

FIG.4

**Office européen des brevets**

## RAPPORT DE RECHERCHE EUROPEENNE

Numéro de la demande

EP 98 40 3035

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DE 31 16 344 A (KERNFORSCHUNGSZENTRUM KARLSRUHE GMBH) 18 novembre 1982 <br> * page 10, alinéa 5 - page 13, alinéa 1 * <br> * page 15, alinéa 3 - page 16, alinéa 5; revendications 1-3; figures 3,4 * <br> --- | 1-4,6,7 | G01N21/31 |
| A | EP 0 084 726 A (EXXON RESEARCH ENGINEERING CO) 3 août 1983 <br> * page 10 - page 11 * <br> * page 12, ligne 13 - page 13, ligne 4; figures 3,4 * <br> --- | 1,6,7 | |
| A | US 5 572 031 A (COOPER DAVID E ET AL) 5 novembre 1996 <br> * colonne 3, ligne 66 - colonne 6, ligne 8 * <br> --- | 1,7 | |
| A | EP 0 318 752 A (MUTEK LASER UND OPTO ELEKTRONI) 7 juin 1989 <br> * colonne 5, ligne 33 - colonne 6, ligne 9; figure 6 * <br> --- | 1,7 | |
| A | US 3 958 122 A (JOWETT TERENCE W ET AL) 18 mai 1976 <br> * colonne 14, ligne 43 - colonne 17, ligne 25 * <br> --- | 1,7 | G01N |
| A | PATENT ABSTRACTS OF JAPAN <br> vol. 010, no. 274 (P-498), <br> 18 septembre 1986 <br> & JP 61 097552 A (TOSHIBA CORP), <br> 16 mai 1986 <br> --- | | |
| A | PATENT ABSTRACTS OF JAPAN <br> vol. 007, no. 253 (P-235), <br> 10 novembre 1983 <br> & JP 58 135940 A (SANYO DENKI KK), <br> 12 août 1983 <br> --- <br> -/-- | | |

**DOMAINES TECHNIQUES RECHERCHES (Int.Cl.6)**

Le présent rapport a été établi pour toutes les revendications

| Lieu de la recherche | Date d'achèvement de la recherche | Examinateur |
|---|---|---|
| LA HAYE | 19 février 1999 | Tabellion, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets**

**RAPPORT DE RECHERCHE EUROPEENNE**

Numéro de la demande

EP 98 40 3035

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PATENT ABSTRACTS OF JAPAN<br>vol. 095, no. 001, 28 février 1995<br>& JP 06 281477 A (SHIMADZU CORP),<br>7 octobre 1994<br>--- | | |
| A | PATENT ABSTRACTS OF JAPAN<br>vol. 018, no. 596 (P-1825),<br>14 novembre 1994<br>& JP 06 222003 A (CHINO CORP),<br>12 août 1994<br>----- | | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 19 février 1999 | Tabellion, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**
EP 98 40 3035

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

19-02-1999

| Document brevet cité au rapport de recherche | Date de publication | Membre(s) de la famille de brevet(s) | Date de publication |
|---|---|---|---|
| DE 3116344 A | 18-11-1982 | AUCUN | |
| EP 0084726 A | 03-08-1983 | US 4471220 A<br>JP 58113837 A | 11-09-1984<br>06-07-1983 |
| US 5572031 A | 05-11-1996 | AUCUN | |
| EP 0318752 A | 07-06-1989 | DE 3741026 A<br>AT 123570 T<br>CA 1327128 A<br>DE 3853941 D<br>JP 1301149 A<br>JP 2603119 B<br>US 5002391 A | 15-06-1989<br>15-06-1995<br>22-02-1994<br>13-07-1995<br>05-12-1989<br>23-04-1997<br>26-03-1991 |
| US 3958122 A | 18-05-1976 | AU 8757775 A<br>BE 836807 A<br>CA 1045405 A<br>DE 2557405 A<br>DK 575175 A<br>FR 2295414 A<br>GB 1530923 A<br>IE 43515 B<br>JP 51088290 A<br>LU 74062 A<br>NL 7514796 A<br>SE 7513903 A | 23-06-1977<br>16-04-1976<br>02-01-1979<br>24-06-1976<br>20-06-1976<br>16-07-1976<br>01-11-1978<br>25-03-1981<br>02-08-1976<br>20-07-1976<br>22-06-1976<br>21-06-1976 |

EPO FORM P0460

Pour tout renseignement concernant cette annexe : voir Journal Officiel de l'Office européen des brevets, No.12/82